# EUROPEAN PATENT SPECIFICATION

(11) **EP 2 386 201 B1**
(45) Date of publication and mention of the grant of the patent: **10.09.2014**
(21) Application number: 11176824.8
(22) Date of filing: 02.07.2009
(51) Int. Cl.: A01K 5/00

(54) **Apparatus for separating and mixing feed for livestock**
Vorichtung zum Trennen und Mischen von Futter für Nutztiere
Appareil pour séparer et mélanger de l'aliment pour bétail

(30) Priority: 04.07.2008 NL 2001757
(43) Date of publication of application: 16.11.2011
(62) Divisional of application: 09164428.6
(73) Proprietor: Trioliet Mullos B.V., 7575 BE Oldenzaal (NL)
(72) Inventor: Liet, Cornelis Hendricus, 7581 TJ Losser (NL)
(74) Representative: De Vries & Metman

(56) References cited:
- EP-A- 1 723 846

## Description

The invention relates to an apparatus for separating and mixing feed for livestock, which apparatus is provided with conveyor alleys with conveying means for conveying bales of feed from a supply side to a discharge side, wherein the apparatus is provided with one or more separating means for separating feed from a bale which is disposed at the discharge side of a conveyor alley.

EP 1 723 846 A describes an apparatus for separating and mixing feed for livestock, wherein a single cutting unit can be moved along several conveyor alleys, in order to cut slices off each of the bales which are present on the respective conveyor alleys.

The invention has for its object to provide a simplified apparatus enabling a carefully dosed feed composition to be obtained in a relatively short period of time.

To this end, according to the invention, the apparatus is provided with a guide frame along which the separating element is moved during the separating of the feed, wherein the guide frame is arranged such as to enable the separating element to be guided along several conveyor alleys in a single cutting path. The guide frame in that case may comprise a horizontal guide along which the separating element can be moved forward and backward along several conveyor alleys. The separating element in that case can for instance be a separating element extending downwards, with a length which preferably exceeds the height of the bale from which feed is to be separated. Alternatively, the separating element can extend in essentially horizontal direction along the width of several conveyor alleys, in which case the separating element can be moved up and down along a guide using driving means.

The discharge conveyor can convey the collected, separated feed to a mixing bin or a mixing robot, which may be provided with one or more mixers, such as a mixing screw. The mixing robot can move the separated and mixed feed to the feeders. One example of such a mixing robot is the Triomatic® robot manufactured by Trioliet Mullos BV.

The discharge conveyor can extend on one or both sides beneath the discharge side of the conveyor alley, so that it is prevented that separated chunks of feed will fall by the side of the conveyor belt.

The separating element can for instance be configured as a cutting unit arranged to remove a slice of feed from the end facing towards the discharge side of the bale that is present at the discharge side. The cutting unit can for instance be arranged to follow a cutting path such that the end facing towards the discharge side of the remaining part of the bale is rearwardly inclined with respect to the vertical. The cutting unit can also be arranged to remove a slice of feed according to a cutting path such that the remaining part of the bale is narrower at the upper side than at the bottom side. These measures can prevent any chunks of feed coming off the remaining part of the bale during or after the separating of feed from a bale and falling onto the discharge conveyor. The remaining part of the bale remains stably disposed on the conveyor alley.

An alternative way of ensuring the cutting face is rearwardly inclined is for the conveyor alleys, or optionally only the discharge side of the conveyor alleys, to be set at an incline, so that the discharge side of the conveyor alley is disposed higher than the supply side. The cutting face of the separating element can then be virtually perpendicular to the conveyor alley.

The separating element can also be configured as a cutter, roller, circular rope, or saw, for instance a circular saw, chain saw, or band saw. The separating element can cut off the feed in vertical direction or at an angle, for instance in such a way that the cutting face is rearwardly inclined.

The supply means of the conveyor alleys can be provided with means for reversing the conveying direction. The conveyor alleys can then move the bales of feed away from the discharge side when a sufficient amount of feed has been separated. The bale which has been cut into can be moved back to the discharge side when a new amount of feed has to be cut off it.

The separating element can be provided with travelling means for moving the separating element between an operating position and a travelling position in which the separating element can be moved to the discharge side of a next conveyor alley. To this end the separating element can be movably mounted on a frame and be swung between an operating position in which the separating element can cut feed off a bale at hand, and a travelling position in the separating element has been swung forward out of the way.

In one possible embodiment of an apparatus according to the invention, the separating element comprises a drive unit to which is attached a knife or saw blade extending downwards and having a length which preferably exceeds the height of a bale of feed to be processed, in which process the knife or saw blade can be moved up and down by the drive unit. The drive unit in that case can be mounted such that it can be swung out of the way on a slide which can be moved by way of a guide, in which case the knife or the saw blade is moved along the width of the discharge side of at least one conveyor alley. Within the range of the cutting face of the knife or the saw blade a rotatable separating roll or crab roller may have been mounted for continuously pushing separated feed away from the knife.

The different conveyor alleys can be used for the supply of different types of feed, such as bales of maize, various species of grass, straw, alfalfa, etc. If so desired, it is also possible for two or more of the conveyor alleys to deliver the same type of feed.

The mixing bin or mixing robot can be provided with weighing means, such as weigh bars, so that the amount of each of the supplied types of feed can be accurately measured and dosed. The mixing bin can for instance be suspended from one or more weigh bars. Alternatively, the conveyor belt for the discharge of the separated feed can be combined with weighing means, for instance weigh bars, so that the weight of the feed which is still travelling to the mixing bin can be added to the weight of the feed which has already been put in the mixing bin. In this way an optimised composite feed menu for the livestock to be fed can be obtained. Thus, for instance, dairy cows can be fed a different diet from tied dairy cows. It is even possible to match the menu to the individual cow.

The supply means of the conveyor alleys can for instance be configured as a conveyor alley with two or more endless conveyor chains extending between two reversible sprockets. Such a chain conveyor can be provided with carriers extending transversely to the conveying direction. The upper part of the conveyor chains can lie protected in a trough. Alternatively, the supply means of the conveyor alleys can be configured as a block slide or be provided with hydraulic conveying means.

The conveyor alleys can be provided with sideboards. Near the discharge side one sideboard may be movable transversely to the conveying direction, for instance swivellable around a vertical axis, in which case a drive unit, for instance a hydraulic cylinder, can press the board against a bale disposed at the discharge side of the conveyor alley. This enables the bale to be gripped tightly during the separating of the feed, making the cutting process more easily controllable and preventing the bale from being pulled apart.

The apparatus according to the invention can comprise a control unit, enabling automated running of the process.

The invention is further elucidated below with reference to the drawing, which provides a schematic illustration of some embodiments of the apparatus according to the invention.
Figure 1A shows, in top view, an apparatus according to the invention.
Figure 1B shows the embodiment of Figure 1A in side view.
Figure 2 shows, in perspective view, a second embodiment of an apparatus according to the invention.
Figure 3 shows a detailed view of a separating element of the embodiment of Figure 3.
Figure 4 shows, in perspective view, a third embodiment of an apparatus according to the invention.
Figure 5 shows a detailed view of a separating element of the embodiment of Figure 4.

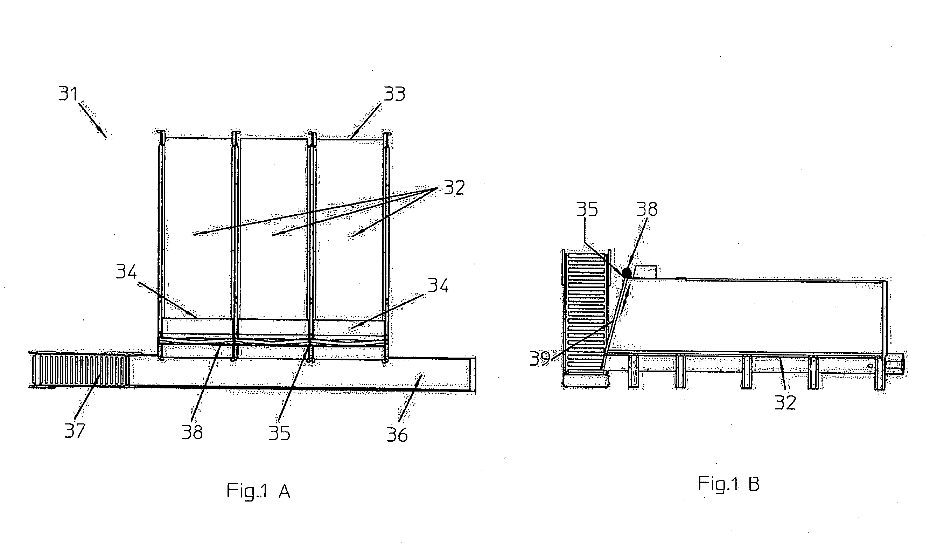

A possible embodiment is depicted schematically in Figures 1A and 1B, in top and side view, respectively. This embodiment comprises an apparatus 31 with a number of conveyor alleys 32 disposed parallel with one another side by side, with a supply side 33 and a discharge side 34. A shared conveyor belt 36 runs along the full width of the discharge sides 34 of all conveyor alleys 32 and conveys separated feed to a belt conveyor 37 moving in an inclined upward direction, which puts the feed in a mixing bin or mixing robot (not shown). A separating element 35 extends across the entire width of the joint discharge ends 34 of the conveyor alleys 32. The separating element 35 comprises a cylindrical cutter 38, which can be moved up and down by way of a frame 39. When a desired amount of a certain type of feed has to be removed from a bale, then the supply means of the conveyor alley 32 on which the bale in question is placed are driven to convey the bale to the discharge end 34 of the conveyor alley 32 in question. When a sufficient amount has been cut off, the conveyor alley 32 can be conveyed in the opposite direction, so that the bale in question is moved away from the separating element 35. By way of a different conveyor alley 32 another bale of a different type of feed can then be conveyed towards the separating element 35 so that a desired amount can be removed from that bale next. The amounts removed fall onto the conveyor belt 36, which then passes the separated feed to the mixing bin. The conveyor belt 36, like the mixing bin, can be provided with weighing means. In this way it can be determined accurately how much feed there is in the mixing bin and on the conveyor belt 36.

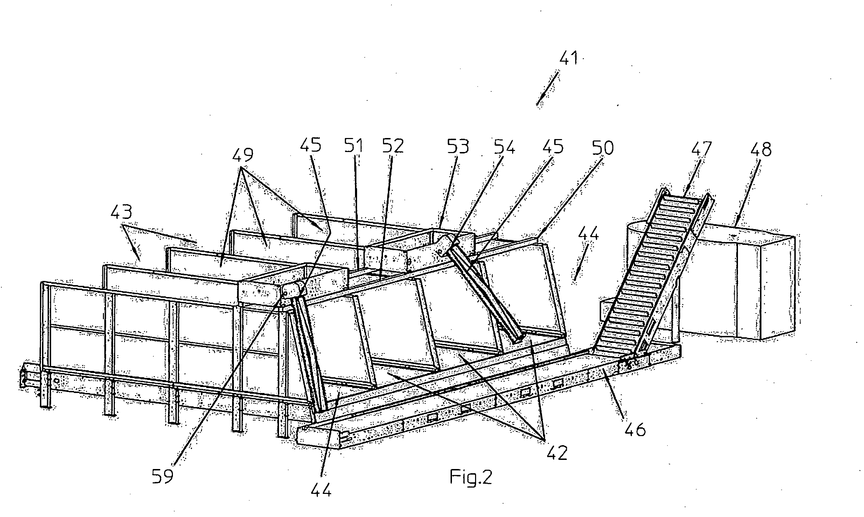

Figure 2 shows yet another possible embodiment, where an apparatus 41 is provided with conveyor alleys 42 for conveying bales of feed from a supply side 43 to a discharge side 44. Near the discharge sides 44 of the conveyor alleys at hand 42 the apparatus 41 is provided with a separating element 45 for separating the feed. A conveyor belt 46 is disposed on the discharge side 44 of each of the conveyor alleys 42. The conveyor belt 46 conveys the feed which has been cut off and collected to a belt conveyor 47 moving in an inclined upward direction, which then puts the feed in a mixing bin 48. Between the conveyor alleys 42 vertical sideboards 49 are arranged.

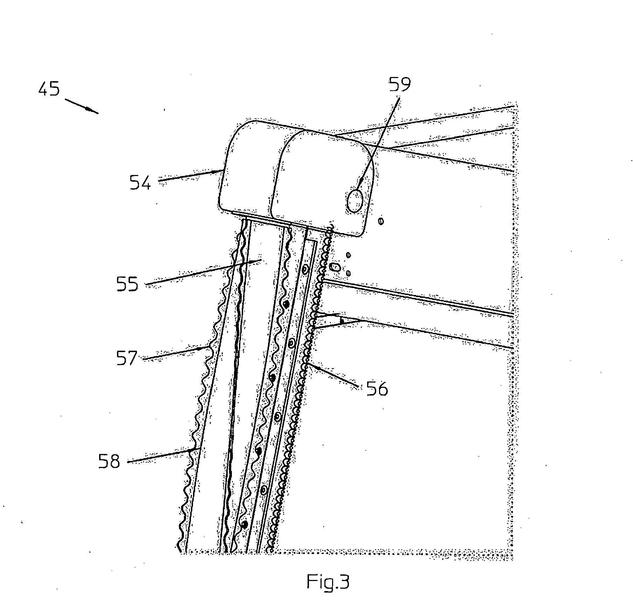

The separating element 45 comprises a guide 50 consisting of two horizontal, parallel rails 51, 52, and a slide 53, which is shown in two different positions in Figure 2. The slide 53 can be moved forward and backward by way of the guide 50 by a drive unit in the slide 53 in a direction parallel with the conveyor belt 46. To the slide 53 a drive unit 54 is hinged by means of a hinged joint 59. Figure 3 shows a drive unit 54 in more detail. By way of the hinged joint 59 the drive units 54 can be swung from an operating position out of the way to a travelling position and back again. Mounted in the drive unit 54 are one or two knives 56, which can be moved up and down with the aid of driving means (not shown). In addition, a separating roll or scraping roll 55 is mounted in the drive unit 54, which can be driven by the drive unit 54. Figure 2 shows the separating element 45 in two different positions: In the Figure with the full line the separating element 45 is in the operating position, while in the Figure with the interrupted line the separating element 45 is in the travelling position. In the operating position the knife or the knives 56 and the separating rolls 55 are suspended at a slight angle to the vertical, for instance an angle of 10 - 30 degrees. As a result, a slice is cut off the bale with a rearwardly inclined cutting face. In the travelling position the angle to the vertical is increased, so that the knife or the knives 56 and the separating roll 55 can be moved to a different conveyor alley 42 without coming into any further contact with the bale or bales on the conveyor alleys 42 disposed in between. The separating roll 55 consists of an essentially cylindrical roll 58 having a length which preferably exceeds the height of the bales from which feed is to be separated. At its circumference the cylindrical roll 56 is provided with serrated finns 57, which extend at regular interspacing in essentially axial direction, in which case they may be moving spiral-wise.

When a conveyor alley 42 supplies a bale of feed, the drive unit 54 with the separating roll 55 and the knife or the knives 56 is swung into the operating position. Next, the knife or the knives 56 are driven to cut off feed from the bale at hand and the separating roll 55 is driven to push the removed feed away from the knife or the knives 56, so that it falls onto the conveyor belt 46. When a sufficient amount of feed has been cut off the bale in question, the knife or the knives 56 and the separating roll 55 are stopped and the drive unit 54 with the knife or the knives 56 and the separating roll 55 is swung out of the way. The slide 53 can then convey the drive unit 54 with the knife or the knives 56 and the separating roll 55 by way of the guide 50 to a next conveyor alley 42, where the knife or the knives 56 and the separating roll 55 can be swung back into the operating position to enable them to cut into a new bale, for instance of a different type of feed.

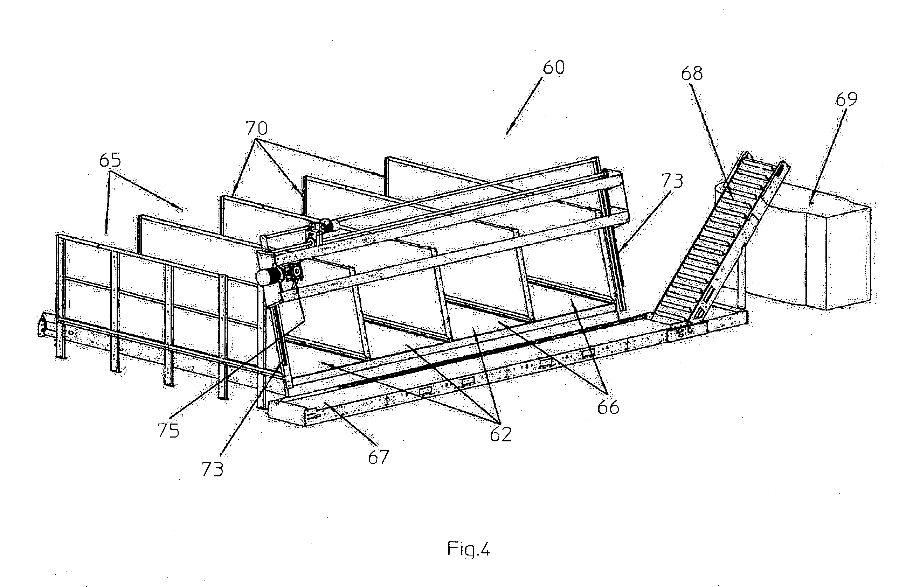

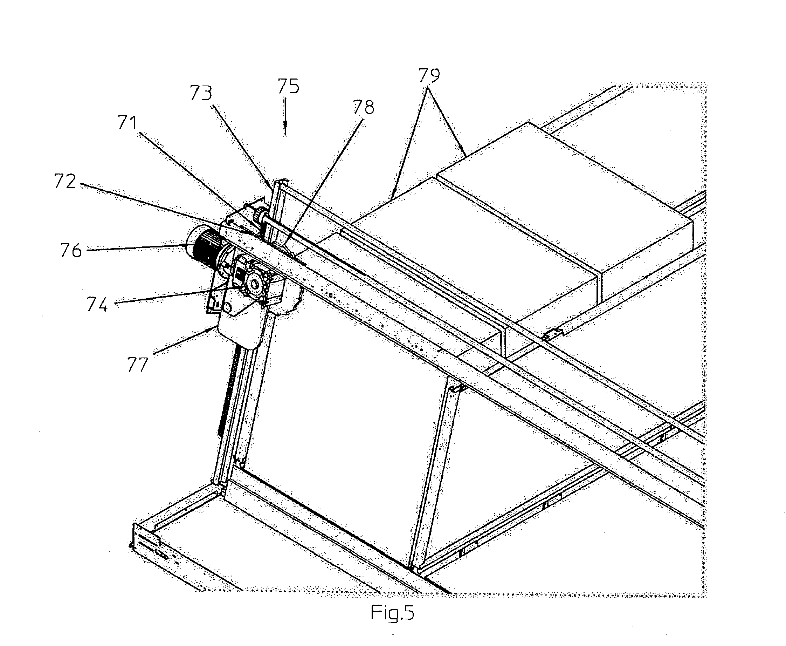

Figure 4 shows a further possible embodiment of an apparatus 60 according to the invention provided with a separating element 75, which is shown in more detail in Figure 5. The apparatus 60 comprises a number of conveyor alleys 62 disposed parallel with one another, which comprise conveying means 63 for conveying bales of feed from a supply side 65 to a discharge side 66.

A conveyor belt 67 runs the full width of the discharge sides 66 of the conveyor alleys 62, with the conveyor alleys 62 extending over the conveyor belt 67 for a short distance. The conveyor belt 67 conveys the feed which has been cut off and collected to a belt conveyor 68 moving in an inclined upward direction, which then puts the feed in a mixing bin 69. Between the conveyor alleys 62 vertical sideboards 70 are arranged.

The separating element 75 consists of a guide frame 73 with a teethed guide 71 along which a drive unit 74 can be moved in a direction which is at a slight angle to the vertical. In addition, the guide frame 73 comprises a horizontal guide 72 along which the drive unit 74 can be moved in horizontal direction. In the drive unit 74 a circular saw 78 is mounted, which is driven by a drive motor 76. The drive unit 74 is further provided with a guide fence 77 to prevent the sawed off feed from being blown away and to guide the feed towards the conveyor belt.

In Figure 4 the saw 78 is engaged in cutting off feed from the top left-hand corner of a bale of feed 79. During the cutting the drive unit with the saw 78 is moved to the right in horizontal direction. On reaching the end of the bale 79, the saw 78 is moved back and moved downwards for a distance, after which the saw 78 is again moved to the right. Other cutting sequences are also possible, for instance ones with sawing from right to left, or ones where each time a vertical slice is sawed off, in which case after the sawing of each slice a saw is moved horizontally for a short distance to cut off a new vertical slice. In this way the saw 78 scans the cutting face, with the cutting face also in this embodiment preferably being rearwardly inclined and being at an angle to the vertical.

When a sufficient amount of feed has been cut off a bale, the drive unit 74 with the saw 78 can be swung out of the way, in the same way as described for the embodiment of Figures 2 and 3. The saw 78 which has been swung out of the way can then be moved to a different conveyor alley, without coming into contact with bales of feed on conveyor alleys disposed in between. If so desired, the bales may alternatively be moved away from the discharge side of the conveyor alley for a distance.

The invention is not restricted to the embodiments described hereinbefore, which can be varied in various ways within the framework of the claims.

## Claims

1. Apparatus (21, 31, 41, 60) for separating and mixing feed for livestock, which apparatus is provided with conveyor alleys (22, 32, 42, 62) with conveying means for conveying bales of feed from a supply side (23, 33, 43, 65) to a discharge side (24, 34, 44, 66), wherein the apparatus is provided with one or more separating means (25, 35, 45, 75) for separating feed from a bale which is disposed at the discharge side of a conveyor alley, wherein the separating element is provided with a guide frame (39, 50, 73) along which the separating element is moved during the separating of the feed, **characterised in that** the guide frame (39, 50, 73) is arranged such as to enable the separating element (25, 35, 45, 75) to be guided along several conveyor alleys in a single cutting path.

2. Apparatus according to claim 1, **characterised in that** the guide frame comprises a horizontal guide (50) along which the separating element can be moved forward and backward along several conveyor alleys.

3. Apparatus according to claim 2, **characterised in that** the separating element (45) is provided with conveying means for conveying the separating element (45) between an operating position, wherein the separating element can cut feed off a bale at hand, and a travelling position, wherein the separating element can be moved to the discharge side (44) of a next conveyor alley.

4. Apparatus according to claim 3, **characterised in that** the separating element (45) is mounted such that it can be swung out of the way and can be moved between the operating position and the travelling position in which the separating element is turned forward.

5. apparatus according to either of preceding claims 3 and 4, **characterised in that** the separating element (45) comprises a drive unit (54) to which a knife (56) or saw blade extending downward is attached, which knife or saw blade can be driven by the drive unit (54), wherein the drive unit can be moved between an operating position and a travelling position and wherein the drive unit is attached to a slide (53) which can be moved by way of a guide (50), wherein the knife or the saw blade is moved along the discharge side of at least one conveyor alley,

6. Apparatus according to claim 1, **characterised in that** the separating element (35) extends essentially horizontally along the width of several conveyor alleys (32), wherein the separating element can be moved up and down by way of a guide (39) using driving means.

7. Apparatus according to claim 1, **characterised in that** the guide frame (73) contains a horizontal (72) as well as a vertical guide (71) along which the separating element (73) can be moved.

8. Apparatus according to claim 7, **characterised in that** the separating element comprises a circular saw (78) which can be moved along the horizontal guide (72) as well as along the vertical guide (71).

9. apparatus according to any one of the preceding claims, **characterised in that** the separating element comprises a band saw, an abrasive rope and/or a water jet or compressed air jet.

10. Apparatus according to any one of the preceding claims, **characterised in that** the conveyor alleys are provided with means for reversing the conveying direction.

11. Apparatus according to any one of the preceding claims, **characterised in that** the separating element (7, 25, 35, 45, 75) is arranged to separate feed along a rearwardly inclined cutting face.

12. Apparatus according to any one of the preceding claims, **characterised in that** within the range of the separating element a rotatable separating roll or scraping roll (10, 55) is mounted for removing separated feed from the separating element.

13. Apparatus according to any one of claims 1-12, **characterised in that** the apparatus comprises a conveyor belt (11, 26, 36, 46, 67) for carrying separated feed to a mixing unit.

14. Apparatus according to claim 13, **characterised in that** the conveyor belt connects directly to the conveying means of the conveyor alleys and has a conveying direction which is transverse to the conveying direction of the conveying means.

## Patentansprüche

1. Vorrichtung (21, 31, 41, 60) zum Abtrennen und Mischen von Futter für Vieh, welche Vorrichtung bereitgestellt ist mit Förderpfaden (22, 32, 42, 62) mit Fördermitteln zum Fördern von Futterballen von einer Zuführseite (23, 33, 43, 65) aus hin zu einer Auslassseite (24, 34, 44, 66), wobei die Vorrichtung bereitgestellt ist mit einem oder mehreren Abtrennmitteln (25, 35, 45, 75) zum Abtrennen von Futter von einem Ballen, welcher an der Auslassseite eines Förderpfads angeordnet ist, wobei das Abtrennelement mit einem Führungsrahmen (39, 50, 73) bereitgestellt ist, entlang welchem das Abtrennelement beim Abtrennen des Futters bewegt wird, **dadurch gekennzeichnet, dass** der Führungsrahmen (39, 50, 73) eingerichtet ist, so dass er es ermöglicht, das Abtrennelement (25, 35, 45, 75) in einem einzelnen Schneidpfad entlang zahlreicher Förderpfade zu führen.

2. Vorrichtung gemäß Anspruch 1, **dadurch gekennzeichnet, dass** der Führungsrahmen eine horizontale Führung (50) aufweist, entlang welcher das Abtrennelement vorwärts und rückwärts entlang zahlreicher Förderpfade bewegt werden kann.

3. Vorrichtung gemäß Anspruch 2, **dadurch gekennzeichnet, dass** das Abtrennelement (45) mit Beförderungsmitteln zum Bewegen des Abtrennmittels (45) zwischen einer Betriebsposition, in welcher das Abtrennmittel Futter von einem bereitgehaltenen Ballen abschneiden kann, und einer Fahrposition, in welcher das Abtrennelement hin zu der Auslassseite (44) eines nächsten Förderpfads bewegt werden kann, versehen ist.

4. Vorrichtung gemäß Anspruch 3, **dadurch gekennzeichnet, dass** das Abtrennelement (45) montiert ist, so dass es aus dem Weg geschwenkt werden kann und zwischen der Betriebsposition und der Fahrposition bewegt werden kann, wobei das Abtrennelement nach vorne geschwenkt ist.

5. Vorrichtung gemäß einem der beiden vorhergehenden Ansprüche 3 und 4, **dadurch gekennzeichnet, dass** das Abtrennelement (45) eine Antriebseinheit (54) aufweist, an welcher ein Messer (56) oder ein Sägeblatt, das sich nach unten hin erstreckt, angebracht ist, welches Messer oder Sägeblatt durch die Antriebseinheit (54) angetrieben werden kann, wobei die Antriebseinheit zwischen einer Betriebsposition und einer Fahrposition bewegt werden kann und wobei die Antriebseinheit an einem Schlitten (53) angebracht ist, welcher mittels einer Führung (50) bewegt werden kann, wobei das Messer oder das Sägeblatt entlang der Auslassseite von wenigstens einem Förderpfad bewegt wird.

6. Vorrichtung gemäß Anspruch 1, **dadurch gekennzeichnet, dass** das Abtrennelement (35) sich im Wesentlichen horizontal entlang der Breite von zahlreichen Förderpfaden (32) erstreckt, wobei das Abtrennelement durch eine Führung (39) unter Verwendung von Antriebsmitteln nach oben und unten bewegt werden kann.

7. Vorrichtung gemäß Anspruch 1, **dadurch gekennzeichnet, dass** der Führungsrahmen (73) eine horizontale (72) sowie eine vertikale Führung (71) aufweist, entlang welcher das Abtrennelement (78) bewegt werden kann.

8. Vorrichtung gemäß Anspruch 7, **dadurch gekennzeichnet, dass** das Abtrennmittel eine Kreissäge (78) aufweist, welche entlang der horizontalen Führung (72) sowie entlang der vertikalen Führung (71) bewegt werden kann.

9. Vorrichtung gemäß irgendeinem der vorhergehenden Ansprüche, **dadurch gekennzeichnet, dass** das Abtrennelement eine Bandsäge, ein Abtragungsseil und/oder einen Wasserstrahl oder Druckluftstrahl aufweist.

10. Vorrichtung gemäß irgendeinem der vorhergehenden Ansprüche, **dadurch gekennzeichnet, dass** die Förderpfade mit Mitteln zum Umkehren der Förderrichtung versehen sind.

11. Vorrichtung gemäß irgendeinem der vorhergehenden Ansprüche, **dadurch gekennzeichnet, dass** das Abtrennelement (7, 25, 35, 45, 75) dazu eingerichtet ist, Futter entlang einer nach hinten geneigten Schneidfläche abzutrennen.

12. Vorrichtung gemäß irgendeinem der vorhergehenden Ansprüche, **dadurch gekennzeichnet, dass** innerhalb des Bereichs des Abtrennelements eine drehbare Abtrennrolle oder Schabrolle (10, 55) montiert ist, um abgetrenntes Futter von dem Abtrennelement zu entfernen.

13. Vorrichtung gemäß irgendeinem der Ansprüche 1 bis 12, **dadurch gekennzeichnet, dass** die Vorrichtung aufweist ein Förderband (11, 26, 36,46, 67) zum Befördern von abgetrennten Futter hin zu einer Mischeinheit.

14. Vorrichtung gemäß Anspruch 13, **dadurch gekennzeichnet, dass** das Förderband die Fördermittel der Förderpfade direkt verbindet und eine Förderrichtung aufweist, welche quer zu der Förderrichtung der Fördermittel ist.

## Revendications

1. Appareil (21, 31, 41, 60) conçu pour séparer et mélanger des aliments pour bétail, lequel appareil est muni de couloirs de convoyage (22, 32, 42, 62) comportant des moyens de convoyage conçus pour convoyer des agglomérats d'aliments d'un côté alimentation (23, 33, 43, 65) à un côté décharge (24, 34, 44, 66), l'appareil étant équipé d'un ou plusieurs moyens séparateurs (25, 35, 45, 75) conçus pour séparer des aliments d'avec un agglomérat disposé du côté décharge d'un couloir de convoyage, dans lequel l'élément séparateur est muni d'un cadre guide (39, 50, 73) le long duquel l'élément séparateur est déplacé lors de la séparation des aliments, **caractérisé par le fait que** le cadre guide (39, 50, 73) est agencé de sorte à permettre le guidage de l'élément séparateur (25, 35, 45, 75) le long de plusieurs couloirs de convoyage dans une seule trajectoire de découpe.

2. Appareil selon la revendication 1, **caractérisé en ce que** le cadre guide comprend un guide horizontal (50) le long duquel l'élément séparateur peut être déplacé vers l'avant et l'arrière le long de plusieurs couloirs de convoyage.

3. Appareil selon la revendication 2, **caractérisé en ce que** l'élément séparateur (45) est équipé de moyens de convoyage conçus pour convoyer l'élément séparateur (45) entre une position opérationnelle, dans laquelle l'élément séparateur peut sectionner les aliments d'un agglomérat à portée de main, et une position de déplacement, dans laquelle l'élément séparateur peut être déplacé vers le côté décharge (44) d'un couloir de convoyage suivant.

4. Appareil selon la revendication 3, **caractérisé en ce que** l'élément séparateur (45) est monté de telle sorte qu'il peut être dévié de la voie et peut être déplacé entre la position opérationnelle et la position de déplacement dans laquelle l'élément séparateur est tourné vers l'avant.

5. Appareil selon l'une quelconque des revendications 3 et 4 précédentes, **caractérisé en ce que** l'élément séparateur (45) comprend une unité d'entraînement (54) à laquelle est attaché un couteau (56) ou une lame de scie s'étendant vers le bas, lequel couteau ou laquelle lame de scie peut être entraîné(e) par l'unité d'entraînement (54), dans lequel l'unité d'entraînement peut être déplacée entre une position opérationnelle et une position de déplacement et dans lequel l'unité d'entraînement est attachée à un coulisseau (53) qui peut être déplacé par le biais d'un guide (50), dans lequel le couteau ou la lame de scie est déplacé(e) le long du côté décharge d'au moins un couloir de convoyage.

6. Appareil selon la revendication 1, **caractérisé en ce que** l'élément séparateur (35) s'étend essentiellement horizontalement le long de la largeur de plusieurs couloirs de convoyage (32), dans lequel l'élément de séparation peut être déplacé vers le haut et le bas par le biais d'un guide (39) utilisant des moyens d'entraînement.

7. Appareil selon la revendication 1, **caractérisé en ce que** le cadre guide (73) contient un guide horizontal (72) ainsi qu'un guide vertical (71) le long desquels peut être déplacé l'élément séparateur (78).

8. Appareil selon la revendication 7, **caractérisé en ce que** l'élément séparateur comprend une scie circulaire (78) qui peut être déplacée le long du guide horizontal (72) ainsi que le long du guide vertical (71).

9. Appareil selon l'une quelconque des revendications précédentes, **caractérisées en ce que** l'élément séparateur comprend une scie à ruban, un cordeau abrasif et/ou un jet d'eau ou un jet d'air comprimé.

10. Appareil selon l'une quelconque des revendications précédentes, **caractérisées en ce que** les couloirs de convoyage sont dotés de moyens d'inversion de la direction de convoyage.

11. Appareil selon l'une quelconque des revendications précédentes, **caractérisées en ce que** l'élément séparateur (7, 25, 35, 45, 75) est agencé pour séparer des aliments le long d'une face de sectionnement inclinée vers l'arrière.

12. Appareil selon l'une quelconque des revendications précédentes, **caractérisées en ce qu'**un rouleau rotatif de séparation ou un rouleau de raclage (10, 55) est monté dans la région de l'élément séparateur, en vue de dissocier des aliments séparés de l'élément séparateur.

13. Appareil selon l'une quelconque des revendications 1 à 12, **caractérisé en ce que** l'appareil comprend une bande convoyeuse (11, 26, 36, 46, 67) pour transporter des aliments séparés vers une unité de mélange.

14. Appareil selon la revendication 13, **caractérisé en ce que** la bande convoyeuse se rattache directement aux moyens de convoyage des couloirs de convoyage, et présente une direction de convoyage transversale à la direction de convoyage des moyens de convoyage.
